# EUROPÄISCHE PATENTSCHRIFT

(11) **EP 1 927 279 B1**
(45) Veröffentlichungstag und Bekanntmachung des Hinweises auf die Patenterteilung: **21.07.2010**
(21) Anmeldenummer: 07120150.3
(22) Anmeldetag: 07.11.2007
(51) Int. Cl.: A01D 45/02, A01F 15/07

(54) **Rolle und landwirtschaftlich nutzbare Maschine**
Spool and machine usable for agricultural purposes
Rouleau et machine agricole utilitaire

(30) Priorität: 28.11.2006 DE 102006056048
(43) Veröffentlichungstag der Anmeldung: 04.06.2008
(73) Patentinhaber: Deere & Company, Moline, IL 61265-8098 (US)
(72) Erfinder: Delphigue, Didier, 21000, Dijon (FR); Viaud, Jean, 70100, Gray (FR)
(74) Vertreter: Magin, Ludwig Bernhard

(56) Entgegenhaltungen:
- EP-A- 0 664 077
- EP-A- 1 649 742
- DE-A1- 19 622 343
- DE-A1- 19 801 528
- US-A- 4 198 804
- US-A- 5 146 846

## Beschreibung

Die Erfindung betrifft eine Rolle in einer landwirtschaftlich nutzbaren Maschine, insbesondere in einer Rundballenpresse, mit einer Drehaufnahme und einem Rollenkörper und eine landwirtschaftlich nutzbare Maschine.

Bekannte Rollen in Rundballenpressen weisen einen Rollenkörper auf, der aus einem dicken Blech geformt wird. Dieses Blech wird zu einem Rohr geformt und auf einer Umfangslinie verschweißt. Damit solche Rollen Gut mitnehmen können, sind sie profiliert. Ein solcher Herstellungsprozess geht aus der DE U 91 13 338 hervor.

Es ist auch bereits bekannt, im Innern solcher Rollen Stützelemente vorzusehen, siehe US 41 98 804.

Aus der DE 198 01 528 geht eine Rolle einer Rundballenpresse hervor, die einen rohrförmigen Rollenkörper aufweist, der beidenends auf Hülsen aufgeschweißt ist und die gesamte Last trägt. Die Hülsen ragen soweit in den Rollenkörper hinein, wie es erforderlich ist, die auf das Rohr einwirkenden Kräfte aufzunehmen.

Die DE 196 22 343 offenbart eine Rolle einer Rundballenpresse, bei der ein flächiges Blech auf eine Vielzahl von Tragscheiben aufgewickelt und mit diesen verschweißt wird. Wenn dieser Blechmantel beschädigt wird und ersetzt werden muss, findet eine Zerstörung aller Schweißverbindungen und somit auch der Tragscheiben statt.

Gemäß der US 5 146 846 wird ein starres und mit einem Belag beschichtetes Rohr auf einen Gitterträger aufgesetzt und mit diesem verschraubt. Der auf das Rohr aufgebrachte Belag, der der Förderung von Gut (Getreide) dient, kann nicht ohne das Rohr ersetzt werden und haftet stoffschlüssig.

Rollen, wie sie in der EP 664 077 A1 oder EP 1 649 742 gezeigt sind und in Feldhäckslern verwendet werden, weisen ein Rohr auf, das sowohl trägt, als auch mit einer Profilierung versehen ist, die Erntegut fördert, bzw. sogar anquetscht, damit es besser verdaut werden kann.

Schließlich weiß man aus der DE 40 19 335 C2, dass auf eine in bekannter Weise herstellte Rolle Schalen aufgesetzt werden können, die einen Einsatz der Rundballenpresse in speziellen Umständen erlauben. Die Rollen selbst sind mit einem Belag versehen, der eine bestimmte Gutfördereigenschaft aufweist.

Das der Erfindung zugrunde liegende Problem wird darin gesehen, dass die auf den Umfang der Rolle wirkenden Kräfte so hoch sind, dass die Schweißnaht reißt und dass das Blech sehr dick ausgebildet sein muß. Je dicker das Blech ist, desto schwerer lässt es sich verformen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann der Rollenkörper aus Halbzeugen, z.B. aus vorgefertigtem Stahlrohr, und einer relativ dünnen, leicht zu fertigenden und an die jeweiligen Verhältnisse leicht anpassbaren Hülle aus Metall oder Kunststoff zusammengesetzt werden. Die Hülle kann bei Verschleiß, Beschädigung oder auch beim Wechsel von Einsatzverhältnissen leicht ausgetauscht werden. Die Hülle wird dabei von einem Träger aufgenommen, der die Kräfte aufnimmt und mittels der Drehaufnahmen einen selbstragenden Rotor bildet. Aufgrund der leichten Anpassbarkeit der Hülle nach dieser Erfindung, sind Hüllen in mehreren Varianten irgendeiner Profilierung denkbar. Die Profilierung mag Stege, Pyramiden, Wölbungen etc. aufweisen. Eine einfache Montage, aber auch eine Demontage der Hülle auf dem Träger ist gewährleistet, wenn die Hülle auf den Träger aufgeschrumpft ist.

Damit die Rolle leicht gelagert, ausgebildet und eingebaut werden kann, ist ihre Drehaufnahme wahlweise als Achse, Welle oder Wellenstummel ausgebildet, und sie trägt Lager oder wird von Lagern getragen.

Es ist lediglich wichtig, dass der Träger die insbesondere radial auftretenden Lasten aufnimmt und dazu stark genug ausgebildet ist. Dies kann mit einem einfachen runden Rohr oder einem Rohr mit einem anderen Querschnitt, oder mit einer Schweißkonstruktion geschehen; wenn dies gewichts- und kostenmäßig vertretbar ist, kann auch ein Vollmaterial gewählt oder ein Rohr mit einem Füll- oder Stützmittel gefüllt werden.

Die Hülle hat lediglich die Aufgabe, für die Förderfunktion zu sorgen, weshalb sie regelmäßig profiliert ist, wozu sie aus Blech oder Kunststoff gebildet ist.

Rundballenpressen, und zwar insbesondere, aber nicht ausschließlich, Festkammerpressen tragen in ihren Presskammern beim Pressen von Silagematerial fast bis zu 1000 kg schwere Rundballen, deren Gewicht auf wenigen Rollen ruht. Insbesondere dann, wenn am Hang gearbeitet wird und eine Rundballenpresse mit einem kompletten Rundballen den Hang abwärts gefahren wird, bevor er entladen wird, sind die Kräfte sehr hoch und andauernd. Es ist daher von höchstem Vorteil, wenn solche Rundballenpressen mit solch erfindungsgemäßen Rollen ausgerüstet sind, wobei leichtere bzw. herkömmliche Rollen an Stellen verwendet werden können, wo solche Lasten nicht auftreten. Die getrennte Bauweise der Rollen erlaubt es auch, je nach der Platzierung der Rolle in der Rundballenpresse anders profilierte Hüllen zu verwenden.

In der Zeichnung ist ein nachfolgend näher beschriebenes Ausführungsbeispiel der Erfindung dargestellt. Es zeigt:
- Fig. 1: eine landwirtschaftlich nutzbare Maschine in Seitenansicht mit mehreren Rollen,

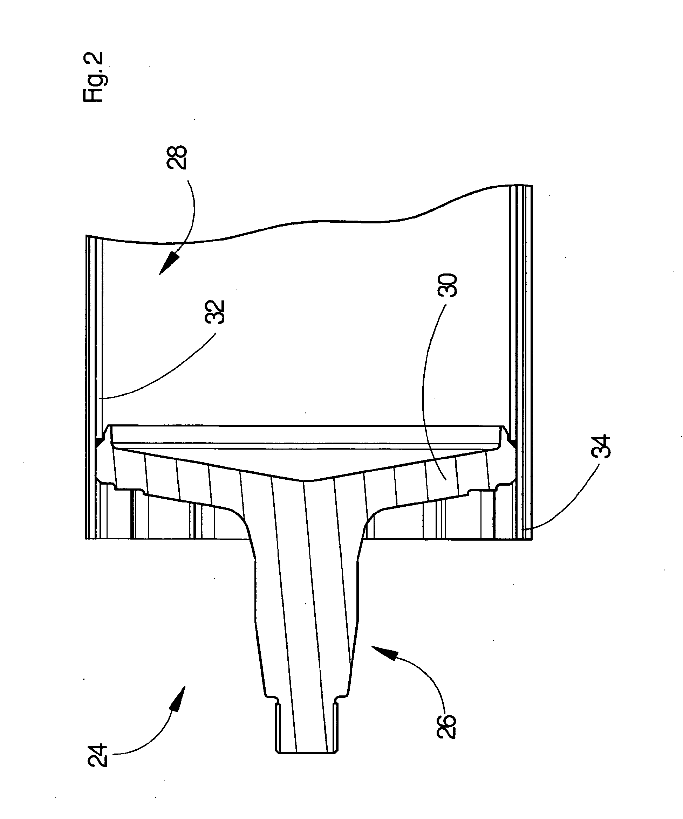

- Fig. 2: einen Längsschnitt durch eine Rolle und

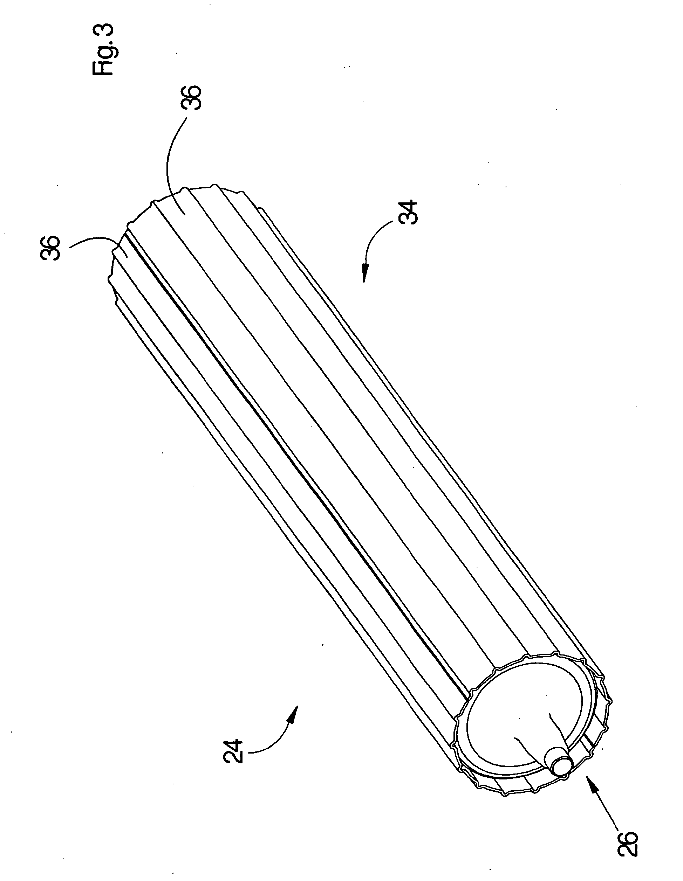

- Fig. 3: eine Rolle in perspektivischer Ansicht.

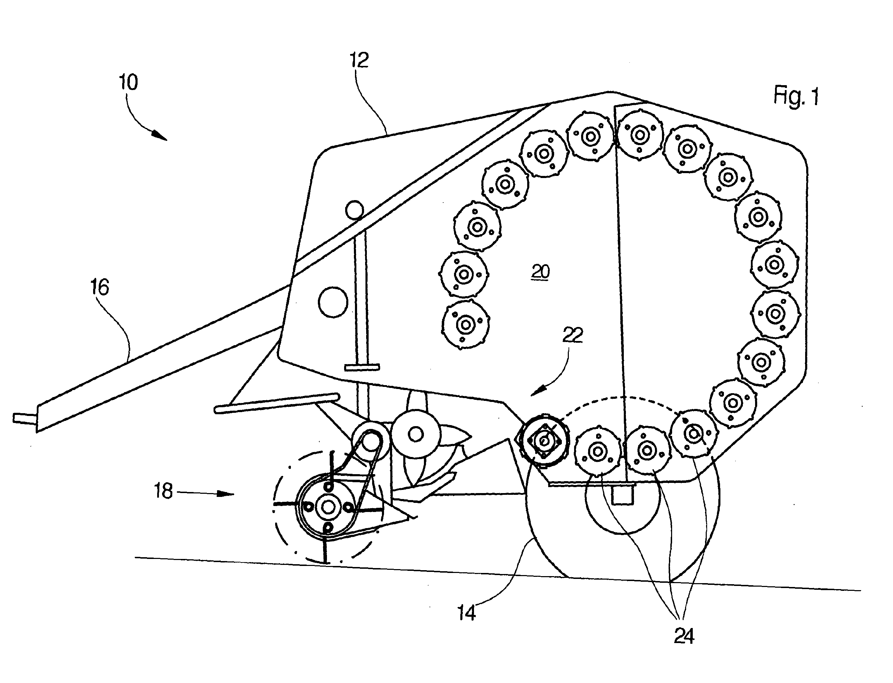

Eine in Figur 1 gezeigte landwirtschaftlich nutzbare Maschine 10 in der Art einer Rundballenpresse in Festkammerausführung weist unter anderem einen Rahmen 12, Räder 14, eine Deichsel 16, eine Pick-Up 18, eine Presskammer 20, einen Einlaß 22 in die Presskammer 20 und Rollen 24 auf. Selbstverständlich sind auch viele weitere Komponenten, wie z.B. eine Bindevorrichtung, vorgesehen, wie dies aber bei Rundballenpressen üblich ist.

Vorzugsweise die am Boden der Presskammer 20 angeordneten Rollen 24 sind aus einer Drehaufnahme 26 und einem Rollenkörper 28 ausgebildet, die in dem Rahmen 12 mittels nicht gezeigter Lager auf herkömmliche Weise drehbar und zum Teil auch antreibbar aufgenommen sind.

Die Drehaufnahmen 26 sind als Wellenstummel mit einer Radialscheibe 30 aus Metall, vorzugsweise aus Stahlguss, ausgebildet.

Die Rollenkörper 28 setzen sich aus einem Träger 32 und einer Hülle 34 zusammen, die miteinander fest, vorzugsweise aber auch lösbar verbindbar sind. Der Rollenkörper 28 wird mit den Drehaufnahmen 26 verschweißt oder verschraubt.

Der Träger 32 ist in diesem Ausführungsbeispiel als ein rundes Stahlrohr ausgebildet, das als Halbzeug bezogen werden kann.

Die Hülle 34 ist aus einem gewalzten oder sonstwie profilierten relativ dünnen Blech gebildet, das in diesem Fall als eine Hülse vorgefertigt und axial auf den Träger 32 aufgeschoben und mittels kleiner Schweißpunkte fixiert wird. In diesem Ausführungsbeispiel ist die Hülle 34 länger ausgebildet als der Träger 32 und bedeckt einen Teil der Drehaufnehmer 26.

## Patentansprüche

1. Rolle (24) in einer landwirtschaftlich nutzbaren Maschine, insbesondere in einer Rundballenpresse (10), mit einer Drehaufnahme (26) und einem Rollenkörper (28), **dadurch gekennzeichnet, dass** der Rollenkörper (28) einen Träger (32) und eine austauschbare Hülle (34) enthält, wobei:
a) der Träger (32) eine tragende und die radialen Lasten aufnehmende Funktion innehat und beidenends mit je einer Drehaufnahme (26) verbunden ist;
b) die Hülle (34) lediglich eine fördernde Funktion innehat, rohrförmig und profiliert ausgebildet ist und auf dem Träger (32) zumindest kraftschlüssig festgelegt ist.

2. Rolle nach Anspruch 1, **dadurch gekennzeichnet, dass** die Drehaufnahme (26) als Achse, Welle oder Wellenstummel ausgebildet und gelagert ist oder die Rolle (24) lagert.

3. Rolle nach Anspruch 1 oder 2, **dadurch gekennzeichnet, dass** der Träger (32) als ein Rohr, ein Käfig oder als Vollmaterial ausgebildet ist.

4. Rolle nach einem oder mehreren der vorherigen Ansprüche, **dadurch gekennzeichnet, dass** die Hülle (34) aus Blech oder Kunststoff gebildet ist.

5. Als Rundballenpresse ausgebildete landwirtschaftlich nutzbare Maschine (10) mit wenigstens einer Rolle (24) nach einem oder mehreren der vorherigen Patentansprüche zumindest im Bodenbereich einer Presskammer (20).

## Claims

1. Roller (24) in a machine usable for agricultural purposes, in particular in a round baler (10), with a rotary pick-up (26) and a roller body (28), **characterized in that** the roller body (28) contains a support (32) and an interchangeable casing (34), where:
a) the support (32) has a supporting function and absorbs the radial loads and is connected at both ends to a respective rotary pick-up (26);
b) the casing (34) merely has a conveying function, is of tubular and profiled design and is fixed at least in a frictional manner on the support (32).

2. Roller according to Claim 1, **characterized in that** the rotary pick-up (26) is designed and mounted as an axle, shaft or shaft stub or supports the roller (24).

3. Roller according to Claim 1 or 2, **characterized in that** the support (32) is designed as a tube, a cage or as solid material.

4. Roller according to one or more of the preceding claims, **characterized in that** the casing (34) is formed from sheet metal or plastic.

5. Machine (10) which is designed as a round baler and is usable for agricultural purposes, with at least one roller (24) according to one or more of the preceding patent claims, at least in the floor region of a baling chamber (20).

## Revendications

1. Rouleau (24) pour une machine utilitaire agricole, notamment pour une presse à balles rondes (10), comprenant un logement rotatif (26) et un corps de rouleau (28), **caractérisé en ce que** le corps de rouleau (28) contient un support (32) et une enveloppe remplaçable (34), dans lequel
a) le support (32) possède une fonction portante et de réception des charges radiales, et est connecté aux deux extrémités à un logement rotatif (26) respectif ;
b) l'enveloppe (34) possède seulement une fonction de transport, est réalisée sous forme tubulaire et profilée, et est fixée au moins par engagement par adhésion sur le support (32).

2. Rouleau selon la revendication 1, **caractérisé en ce que** le logement rotatif (26) est réalisé sous forme d'axe, d'arbre ou de bout d'arbre et est supporté sur palier ou supporte le rouleau (24).

3. Rouleau selon la revendication 1 ou 2, **caractérisé en ce que** le support (32) est réalisé sous forme de tube, de cage ou de matériau massif.

4. Rouleau selon l'une quelconque ou plusieurs des revendications précédentes, **caractérisé en ce que** l'enveloppe (34) est réalisée en tôle ou en plastique.

5. Machine utilitaire agricole (10) réalisée sous forme de presse à balles rondes, comprenant au moins un rouleau (24) selon l'une quelconque ou plusieurs des revendications précédentes, au moins dans la région du fond d'une chambre de pressage (20).
